# EUROPEAN PATENT APPLICATION

(11) **EP 2 785 071 A2**
(43) Date of publication of application: **01.10.2014**
(21) Application number: 14161149.1
(22) Date of filing: 21.03.2014
(51) Int. Cl.: H04N 21/436, H04N 21/472, H04N 21/488, H04N 21/482, H04L 12/28

(54) **System for synchronising and centralising event instructions and/or indicators in video/audio systems**

(30) Priority: 22.03.2013 GB 201305254
(71) Applicant: Pace Plc, Saltaire Shipley West Yorkshire BD18 3LF (GB)
(72) Inventor: Vinayababu, Kiran, Bradford West Yorkshire BD18 3LF (GB); Kumar, Kiran, Bradford West Yorkshire BD18 3LF (GB)
(74) Representative: Tomkinson, Alexandra

(57) **Abstract**

The invention relates to a system and method for the provision of video, audio and/or additional services, said system including one or more devices which allow user interaction with said system to control the operation of the same and the provision of selected video, audio and/or additional services therefrom and which can be accessed via said devices. A server is provided for the storage of data relating to the services which are available to the said users in the future and said system includes the ability for a user, via a device, to generate an instruction to the server for an indicator relating to an event on a particular service to be generated at a time in the future to indicate to the user of the occurrence of the event.

## Description

The invention to which this application relates is a system which allows the synchronisation and centralisation of event reminders instructions and/or indicators of a type which typically, although not necessary exclusively, are generated to remind one or more users of a system for the provision of video and/or audio and/or additional services.

The provision of audio, video and/or additional services can be provided in a number of ways but typically, include, at each premises, a means for the reception of broadcast audio, video and/or additional data, such as a satellite antenna and/or fibre optic cable; means to transfer the received data via co-axial, fibre optic cable and/or via wireless transmission to at least one broadcast data receiver, often referred to as a set top box, which may be provided as a separate component connected to a display screen and/or speakers or integrated into said display and/or speakers. The broadcast data receiver processes the received data into a format which is suitable to generate the video, audio and/or additional services such as the internet, to be provided to the user via the speakers and display screen.

It is also possible for a user to interact with the broadcast data receiver, typically via a remote control device, to allow the functions of service selection, channel selection, volume control and the like, to be controlled by the user to suit their own preferences. In addition, it is possible for a user to select to store particular programmes which are available, by making a selection to record the same on a memory which is provided as part of the system. Furthermore, it is possible for the user to select to be reminded of specific events which may occur in the future such as, for example, a particular sporting event, or a music event or a programme, or series of programmes, which are scheduled to occur at a particular time and on a particular channel and/or to receive an indication when another programme in a particular series of programmes, is next to be broadcast.

While this form of generating indicators to act as a reminder works well in relation to the interaction between a particular user and a particular broadcast data receiver, problems are created by the increasingly popular provision of a plurality of devices which can all be connected to the system at any given time and be operated, independently, by different users, typically within the same premises or vicinity thereof. This means that the provision of the broadcast data into the premises, can then be shared and accessed via a number of devices rather than via a single broadcast data receiver. The devices which can be used, can be any, or any combination, of broadcast data receivers, mobile devices, or the like. The plurality of devices can also be used, via the system, to share content that has been recorded on, for example, a memory which may be provided in one of the broadcast data receivers or may be provided independently and be accessible via the system, and which acts as a hub for the system, in either case.

The provision of this plurality of devices creates management problems in that each of the users via their own device, can select to obtain reminders of particular events in the future but, conventionally there is no ability for an event indicator which is instructed and which is generated to be made user specific or specific to a group of users. As such, the conventional system does not allow respective indicators to be allocated to respective users which therefore means that the reminder function is of little or no use when a plurality of devices are used by one or more users to interact with the system.

The aim of the present invention is to provide a system which can be utilised by a number of users who can selectively access and control the system to instruct the same to generate one or more indicators which can be rendered specific to that particular user and/or be allocated to a specified number of users of the system.

In a first aspect of the invention, there is provided a system for the provision of video, audio and/or data services to one or more users of said system, said system accessible by each user via a selected one of a number of devices, said system provided to allow said device to be used by the user to generate an instruction related to a future event relating to the video, audio or additional services via user interaction means and wherein, the said system includes a server and/or memory in which the user generated instructions are stored and, at an appropriate time in the future, an indicator is generated by the server and made available to one or more selected users which relates to said future event.

In a further aspect of the invention there is provided a method for the provision of video, audio and/or additional services, said system including one or more devices which allow user interaction with said system to control the operation of the same and the provision of selected video, audio and/or additional services therefrom and which can be accessed via said devices and wherein the system includes a server for the storage of data relating to the services which are available to the said users in the future and said system includes the ability for a user, via a device, to generate an instruction to the server for an indicator relating to an event on a particular service to be generated at a time in the future to indicate to the user the occurrence of the event.

Typically, said server receives and stores said instructions in a manner which is related to the user and/or device from which the instruction was received.

In one embodiment, the identity of the user who issued the instruction is indicated at the time of generation of the instruction and the indicator is generated only to that user at the said time in the future.

In one embodiment, the device to which the indicator is sent, is the same device from which the instruction was generated. In another embodiment, the device to which the indicator is sent, is alternatively, or in addition, a device which is indicated, at the time of generation of the instruction, as that to which the indicator should be sent.

In one embodiment the indicator is displayed and/or sounded by the device and/or display and/or speaker apparatus with which the device is provided in communication with at that time.

In one embodiment the indicator provides information used to select the method of display and/or sounding performed by the device. In one embodiment the indicator may be broadcast to a number of devices and, for example, the device used to generate the instruction for the indicator may be provided with a relatively detailed indicator whilst the indicator generated on the other devices is in the form of an icon or sound. In addition, or alternatively, the device may be controlled by the user to determine the particular format of indicator which is generated.

In one embodiment, at the time of generating the user instruction, the user will be given the option as to whether or not they wish the indicator which is to be generated in the future, to also be transmitted to any other devices and/or users of the system and said information will be stored in the server along with the instruction so that when the indicator is to be generated in the future, the appropriate users and/or devices receive the indicator.

In one embodiment, the indicator will be transmitted automatically to all users or, alternatively, to a group of users.

In one embodiment, the server determines whether to transmit the indicator to users, based on pre-determined criteria stored in the server.

For example, if one or more users have indicated that they have a specific interest or a specific service in which they are interested, then if the system server receives an instruction related to that particular pre-determined interest from a user, the server will identify those other users who have expressed an interest and automatically generate the indicator to those users as well.

In one embodiment, each of the users will have the option of selecting to participate in a group indicator service or not.

In one embodiment, in addition to issuing instructions, the user will be able to identify themselves such that their identity will be linked to the instructions.

In one embodiment, the particular instructions and indicators which have been selected, are displayed on an information screen which is available to all of the users and the particular event to which the instruction is related and, if possible, the identity of the user with regard to each of the instructions, will be displayed so as to be available to other users.

In one embodiment, upon display of this information, other users can select whether or not to also receive an indicator at the required time relating to a particular instruction.

In one embodiment, the instruction relates to a particular event which is occurring on a particular channel or service at a particular time and the instruction is for the indicator to act as a reminder that the event is about to occur or will occur at a specified time in the near future.

In generating indicators, the server may take into account other aspects such as, for example, whether the event can in fact be provided to the identified user such as, due to constraints relating to parental control and the like.

Typically, the server is controlled to operate using Universal Plug and Play (UPnP). In one embodiment users selectively indicate their degree of interest in events by registering those preferences with the server which is used to broadcast the indicators for events to the user devices.

In one embodiment, the server is provided as a stand alone item in connection with the system or, alternatively, can be provided as part of a broadcast data receiver which acts as the hub of the system. Typically, in this case, the broadcast data receiver which acts as a hub, will also include the storage medium in which data can be stored to allow programming to be accessible to each of the users of the system.

Typically, the system will be provided in a closed environment in which the users are identified, typically being family members, dwellers of the same premises and/or office workers in the same premises to interact with the system within the said premises or adjacent thereto.

In one embodiment, the system is provided to allow interaction with the same via a number of different types of devices such as broadcast data receivers, hand-held devices, tablet devices, laptop devices and/or personal computers. Typically, the generation of the instruction and subsequent indicator will be achieved in the same manner in the system, regardless of the device used by the user.

In one embodiment, the server includes means to allow the instruction from a particular user, to be shared with one or a number of further users.

In one embodiment, the sharing of the instructions to a number of users so that each of the users will receive an indication, is done on the basis of information received from the user who generated the instructions. Alternatively, the decision as to which users are to receive the indicator in response to a user generated instruction, is made by the system on the basis of information stored in relation to likes and dislikes and/or other preferences and/or other restrictions on usage, of specific users of the system and a decision is then made as to whether or not an indicator should be issued to any of those users.

In one embodiment, a default set of preference are used to make that determination.

In a further aspect of the invention, there is provided a system for the provision of video, audio and/or additional services, said system including a plurality of devices which allow user interaction with said system to control the operation of the same and provision of selected video, audio and/or additional services therefrom and which can be accessed via said devices and wherein the system includes a server for the storage of data relating to the services which are available to the said users in the future and said system includes the ability for a user, via a device, to generate an instruction to the server for an indicator relating to a particular service to be generated at a time in the future to remind the user of the occurrence of the event and said server receives and stores said instructions in a manner which is at least specific to the user and/or device from which the instruction was received.

Specific embodiments of the invention are now described with reference to the accompanying figures wherein;
Figure 1 illustrates, schematically, a system in accordance with one embodiment of the invention;
Figure 2 illustrates a display which can be generated to one or more users of the system in accordance with one embodiment of the invention;
Figure 3 illustrates the manner in which a new instruction can be created; and
Figure 4 illustrates the manner in which an indicator can be generated in response to an instruction.

There is provided in accordance with the invention, a system 2 which receives one or more data signals from one or more sources in a premises. Typically, there is provided a first broadcast data receiver or hub 5, which includes a plurality of tuners 6 which allow the selection of specific data from the data which is received via connection 10 in order to generate specific television programmes and/or services to one or more users upon receipt of a user selection. The broadcast data receiver can also include a storage means 8 such as a hard disk drive, which allows selected data for selected programmes and/or additional services, to be selectively stored and made available for viewing at a later date. The broadcast data receiver or hub, is selectively accessible and controllable, via a number of user devices or clients 14 which can be connected to the broadcast data receiver hub 5 by a physical network such as cable network within the premises, power line carrier system, or wireless. Furthermore, the devices which are used, may be broadcast data receivers which are the same as the broadcast data receiver hub or, more likely, may be simpler versions of data broadcast receivers which, for example, do not include tuners and/or a storage medium, or may be devices such as a personal computer, laptop, tablet device or mobile phone, for example. In each case, the devices allow each user at least some degree of accessibility to the broadcast data receiver hub and some level of controllability of the same so as, for example, to allow the user to select to receive a particular programme, in response to which one of the tuners in the broadcast data receiver hub will then be controlled to receive and generate data for the service and provide that to the specific device and user. At the same time a second device may be used to select an alternative service or alternative programmes as is the same with each of the devices which are connected to the system. Each device, when active, will typically be controlled by one user of a group of users, so that for example, at any given time, a number of users, via their respective devices, may control the broadcast data processed through the hub to receive services and/or channels and/or programmes which are relevant to their specific requirements.

In addition, the broadcast data receiver hub or another part of the system, includes a UPnP server 12 which allows the control and management of control signals received from the different user devices and also, in accordance with the invention, allows the centralised storage and management of instructions which are received from the users.

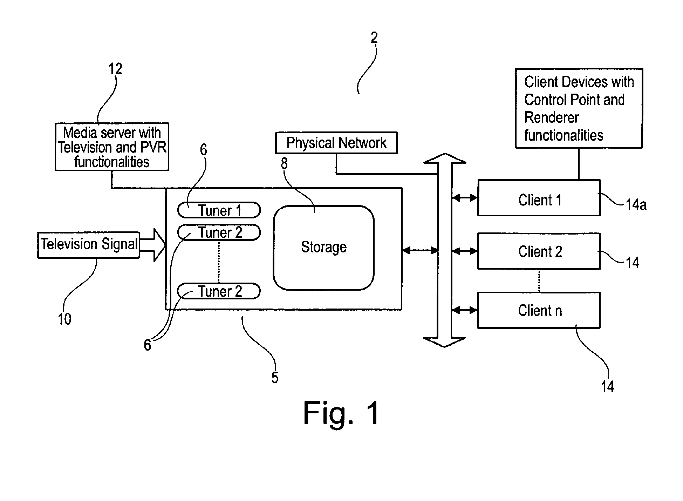

In accordance with the invention, the centralised management server 12 allows the receipt of instructions from each of the user devices and a link to be made between the user and/or device and specific instruction which is received during the subsequent processing of that instruction. Thus, for example, if a first user, via device 14a in Figure 1 issues an instruction, such as, for example, to be reminded when a particular programme is due to be shown, then the server will receive that instruction and store it as a specific instruction received from that user. For a reminder, an indication list will be generated on a display screen of the appropriate device for that user at a time slightly in advance of the time at which the particular programme is to be shown so as to remind the user. As, in accordance with the invention, the instruction is linked with a particular user, so the server will only display the indicator to that particular user and typically, at that time, the server will be aware of the particular device which that particular user is using to access the system and so the indicator will be displayed via the display screen provided with or connected to that said device. This can be repeated for indicators which are generated by each of the users of the system.

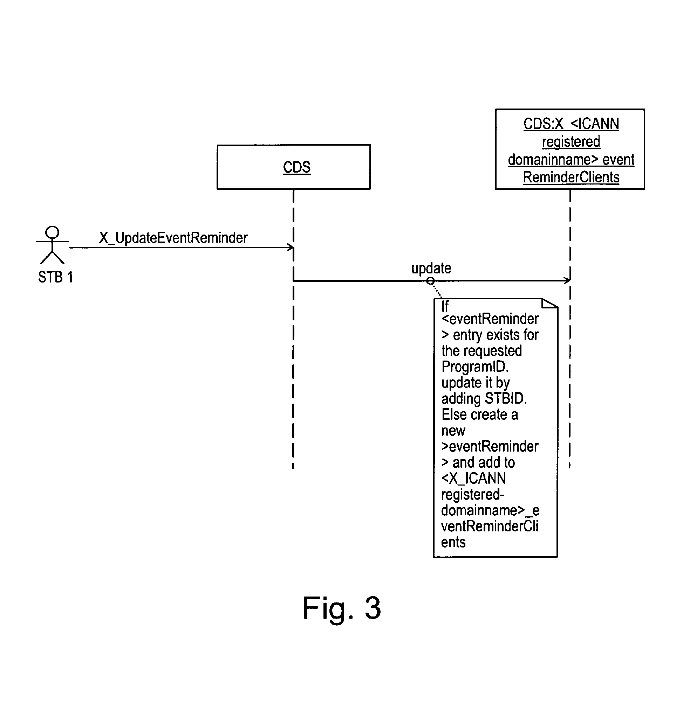

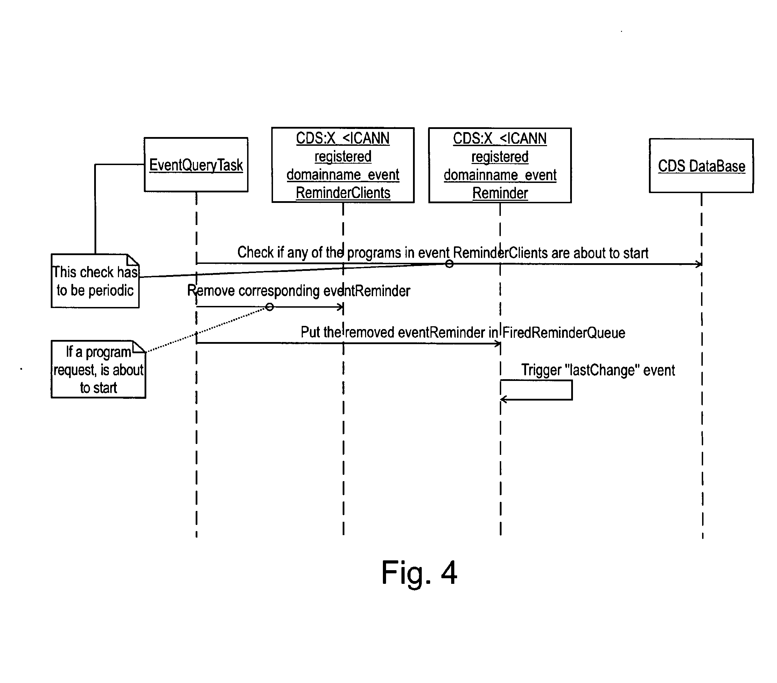

Figures 3 and 4 illustrate the manner in which the user generates an instruction which is used to update the memory in the server and in which the device and/or user identification is added. Figure 4 illustrates that the server will at regular time intervals, check for any upcoming events for which instructions have been received and, upon identification of such an event, will generate an indicator specific to a particular user or users and/or device or devices who have issued instructions relating to that particular event.

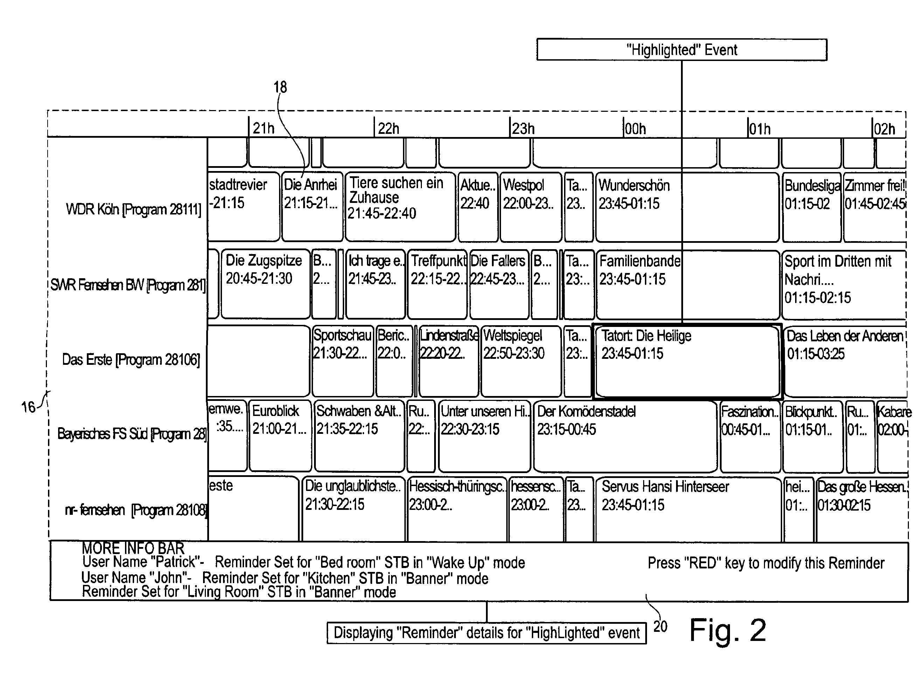

Figure 2 illustrates a display 16 which can be generated on display screens with the display available to be selected by the users at any given time and which may be typically be provided as part of an electronic programme guide (EPG). The display indicates to the user, events 18 in the form of cells which are selectable via the user's device and in addition, indicates in the portion 20, instructions which have been received for event reminders and for which indicators will be displayed. Thus, for example, in the example shown in Figure 2 one of the users, Patrick, has sent an instruction via the device known as the bedroom STB for a wake up indicator which can start the device at a time in the future in order to view or record a programme. The user John has sent an instruction using the "kitchen STB" device as indicated, for an indicator to be generated in a banner display mode to act as a reminder for a programme to be viewed in the future.

It should be appreciated that reference to an indicator can mean the generation of a display in a particular form and/or a change in condition of operation of the hub device and/or the device as instructed by the user.

In certain embodiments it may not be possible for the user identification to be determined and therefore the information displayed may relate only to a particular device rather than to a particular user so that, for example, the user of the system will be able to see that an indicator for a particular programme is going to be generated on a specific device in connection with the system in the future so that they will know to refer to that particular device in the future.

In addition to generating an indicator for a particular device or a particular user, in a further feature of the invention, the server may be provided with means to store information relating to preferences of particular users and/or particular devices. The preferences may also include particular restrictions for particular devices so as to, for example, prevent children from viewing certain subject matter via certain devices.

In one embodiment each of the users may be requested to indicate their specific interests from a range of interests and, for example, if a sub-set of users indicate a preference for sports then, when a particular user generates an instruction relating to a sports event, the server may decide to automatically generate an indicator at the appropriate time to each of the users who have indicated a liking for sports. Similarly, the server may decide not to send an indicator to users who expressly dislike sport when a user instruction is generated relating to a sports event.

Furthermore, or alternatively, the system may decide not to send an indicator to a particular device which, for example, it has already been informed should not receive material of a particular type, for example, of an adult nature so that, for example, if a child is known to use a specific device to connect with the system, then that device will not give any indication in relation to adult content material.

Users may decide to opt in or opt out of the indicator service from the server of the system and furthermore, may at the time of generating the instruction, or subsequently, prior to the indicator being generated, decide to share the instructions with one or more other users.

There is therefore provided in accordance with the invention a system and method whereby specific instructions can be generated by specific users and/or via specific devices in a system which comprises a number of users and devices. The centralised management of the same provides an accurate generation of users and/or device specific indicators. For example, when the indicators are reminders, the invention allows users to set programme event reminders and be alerted when a specific state or state change of a programme event occurs. Specific enhancements include any or any combination of an alert when the reminder is set such as the broadcast, specific device, specific user which is used, a list of possible indicators which can be generated, the ability to delete and edit instructions which have been generated, the provision of parental control features and the ability for users to select to take part in the service or not.

## Claims

**1.** A system for the provision of video, audio and/or data services to one or more users of said system, said system accessible by each user via a selected one of a number of devices, said system provided to allow said device to be used by the user to generate an instruction related to a future event relating to the video, audio or additional services via user interaction means and wherein, the said system includes a server and/or memory in which the user generated instructions are stored and, at an appropriate time in the future, an indicator is generated by the server and made available to one or more selected users which relates to said future event.

**2.** A system according to claim 1 wherein means are provided to indicate the identity of the user who issued the instruction at the time of generation of the instruction and the indicator is generated only to that user at the said time in the future.

**3.** A system according to claim 1 wherein the indicator is made available to the one or more users via one or more of the said devices.

**4.** A system according to claim 3 wherein the device to which the indicator is sent, is the same device from which the instruction was generated.

**4.** A system according to claim 3 wherein the device to which the indicator is sent, is one or more devices which are indicated, at the time of generation of the instruction, as those to which the indicator should be sent.

**5.** A system according to claim 1 wherein the indicator is displayed and/or sounded by one or more of the said devices and/or a display and/or speaker apparatus with which the receiving device is provided in communication with at that time.

**6.** A system according to claim 5 wherein the indicator provides information used to select the method of display and/or sounding performed by the device.

**7.** A system according to claim 1 wherein the indicator is broadcast to a number of devices in different formats.

**8.** A system according to claim 7 wherein the device used to generate the instruction for the indicator is provided with a relatively detailed indicator whilst the indicator generated on other devices is in the form of an icon or sound.

**9.** A system according to claim 1 wherein the device is controlled by the user to determine the particular format of generation of a received indicator.

**10.** A system according to claim 1 wherein the server is controlled to operate using Universal Plug and Play (UPnP).

**11.** A system according to claim 10 wherein users selectively indicate their degree of interest in events by registering those preferences with the server which is used to broadcast the indicators for events to the user devices.

**12.** A system according to claim 1 wherein the server is provided as a stand alone item in connection with the system.

**13.** A system according to claim 1 wherein the server is provided as part of a broadcast data receiver which acts as the hub of the system and includes a memory in which data can be stored to allow programming to be accessible to each of the users of the system.

**14.** A system according to claim 1 wherein the system is provided in a closed environment in which the users are identified.

**15.** A system according to claim 1 wherein the devices are any, or any combination of, broadcast data receivers, hand-held devices, tablet devices, laptop devices and/or personal computers.

**16.** A system according to claim 1 wherein the server includes means to allow the instruction from a particular user, to be shared with one or a number of further users.

**17.** A method for the provision of video, audio and/or additional services, said system including one or more devices which allow user interaction with said system to control the operation of the same and the provision of selected video, audio and/or additional services therefrom and which can be accessed via said devices and wherein the system includes a server for the storage of data relating to the services which are available to the said users in the future and said system includes the ability for a user, via a device, to generate an instruction to the server for an indicator relating to an event on a particular service to be generated at a time in the future to indicate to the user the occurrence of the event.

**18.** A method according to claim 17 wherein said server receives and stores said instructions in a manner which is related to the user and/or device from which the instruction was received.

**19.** A method according to claim 17 wherein at the time of generating the user instruction, the user has the option as to whether or not they wish the indicator which is to be generated in the future, to also be transmitted to any other devices and/or users of the system and said transmission information is stored in the server along with the instruction so that when the indicator is to be generated in the future the appropriate users and/or devices receive the indicator.

**20.** A method according to claim 17 wherein the indicator is transmitted automatically to all users or a group of users.

**21.** A method according to claim 17 wherein the server determines whether to transmit the indicator to users based on pre-determined criteria stored in the server.

**22.** A method according to claim 21 wherein the predetermined criteria is at least partially based on one or more user indications that they have a specific interest or a specific service in which they are interested.

**23.** A method according to claim 20 wherein the users have the option of selecting to participate in a group indicator service or not.

**24.** A method according to claim 17 wherein in addition to issuing instructions, the user identifies themselves such that their identity will be linked to the instructions.

**25.** A method according to claim 17 wherein the particular instructions and indicators which have been selected, are displayed on an information screen which is available to all of the users and the particular event to which the instruction is related and/or the identity of the user with regard to each of the instructions is displayed so as to be available to other users.

**26.** A method according to claim 25 wherein upon display of this information, other users can select whether or not to also receive an indicator relating to a particular instruction.

**27.** A method according to claim 17 wherein the instruction relates to a particular event which is occurring on a particular television channel or service at a particular time.

**28.** A method according to claim 17 wherein the instruction is for the indicator to act as a reminder that the event is about to occur or will occur at a specified time in the near future.

**29.** A method according to claim 17 wherein in generating an indicator the server takes into account at least one other aspect to determine whether the event can be provided to the identified user.
